# EUROPEAN PATENT SPECIFICATION

(11) **EP 1 329 564 B1**
(45) Date of publication and mention of the grant of the patent: **15.06.2005**
(21) Application number: 02027543.4
(22) Date of filing: 09.12.2002
(51) Int. Cl.: E04B 1/48, E04B 1/41, F16B 35/04

(54) **Dowel connector for concrete layers and its use**
Dübel für die Verbindung von Betonschichten und seine Verwendung
Connecteur à cheville pour les couches de béton et son utilisation

(30) Priority: 18.01.2002 IT VI20020008
(43) Date of publication of application: 23.07.2003
(73) Proprietor: TECNARIA S.p.A, 36061 Bassano del Grappa, Vicenza (IT)
(72) Inventor: Guazzo, Marco, 36061 Bassano del Grappa (Vicenza) (IT)
(74) Representative: Bettello, Pietro, Dott. Ing.

(56) References cited:
- EP-A- 1 041 208
- FR-A- 539 750
- US-A- 5 428 936
- US-A- 5 649 798

## Description

The present finding regards a pin connector for concrete structures, according to the preamble of claim 1. Such a device is used to improve the connection between two distinct layers of concrete used in restructuring works of floors and the like.

It is known that in the field of building there is often the need to consolidate structures made from reinforced concrete, be they in good or bad condition. Indeed, some creations, although integral, can be undersized with respect to current constructive standards.

Vice-versa, atmospheric or seismic agents can cause damage to structures, requiring adequate interventions suitable for restoring the original conditions.

As an example, we cite the need to improve the weight-bearing capacity of some floors made with reinforced concrete and tiles, which constitutes the object of the present finding.

Often, there is also the problem in reinforcement operations of the reinforced concrete pillars used, for example, in motorway bridges which, with the passing of time, undergo a typical process of deterioration. In such types of interventions we normally proceed with the application of an overlying layer of concrete on the pre-existing mass of concrete and it is necessary to ensure a mutual and stable connection between the two layers, in order to be able to reinforce the structure as a whole and to obtain a homogeneous behaviour of the work.

Normally, the stable connection between the two layers of concrete are cast in successive steps (i.e. the existing one and the added one) is obtained by foreseeing the application with a brush on the surface of the existing layer of concrete of the thin film of a chemical product (known in the jargon of the sector as "primer"), suitable for acting as a glue with the filler layer of concrete. The main drawback of such technology consists of the fact that, in particular adverse environmental conditions the primer is difficult to apply. Moreover, the surface upon which the primer is applied must neither be friable nor inconsistent and must also be made free from impurities (dust, layers of varnish or oily deposits).

Therefore, it is often necessary to sand the surface before the application of the primer, laying down the filler concrete necessarily within determined times, the treatment otherwise being compromised.

To try to avoid this and other similar drawbacks a device has been thought of, described in EP-A-1 041 208, of the same Applicant, which does not have the problems outlined above, since its use does not suffer from the limitations described above.

Essentially the device consists of a pin connector, which comprises a shaft equipped with a lower shank, the outer surface of which is advantageously shaped so as to have an increased adherence. Said shank is equipped with an intermediate plate, arranged perpendicular with respect to the axis of the shank itself.

The shank is intended to be housed in a hole made in the existing layer of concrete, whereas the plate rests upon the contact surface of the existing layer of concrete with the filler layer. Such a device is functionally quite simple, but it is only capable to a small degree of bearing possible shearing stresses generated by the mutual sliding between the two layers of concrete.

The purpose of the present finding is that of foreseeing a pin connector which, besides having a substantial resistance to shearing stresses, can be mounted with great ease and extremely quickly on floors and the like in restructuring works thereof. This is obtained by foreseeing that the pin connector comprises, as usual, a shaft equipped with a lower shank with the side surface threaded, suitable for being screwed into the concrete. Also according to the finding about the shaft there is an intermediate plate arranged perpendicular with respect to the longitudinal axis, the shank being intended to slot into a hole made in the existing layer of concrete, the plate resting upon the contact surface of said existing layer with the filler layer. The edge of the hole of the plate, into which the pin connector is intended to slot, has a frusto-conical configuration. In the same way, on the surface of the shaft arranged immediately upstream of the threaded side surface there is a portion which is also frusto-conical shaped which, however, when the shaft is inserted in the hole, is arranged in the opposite direction with respect to the aforementioned frusto-conical raised edge. The plate is also fitted with two raised edges, which are arranged parallel to the shaft, facing in opposite directions and intended to slot one in the pre-existing layer of concrete and the other in the new layer of concrete.

From the operative point of view the mounting of the device is much simpler with respect to similar devices described previously, since the operator must simply make the shaft hole and a simple raised edge on the pre-existing layer of concrete near to the aforementioned hole so as to be able to insert the aforementioned raised edge facing downwards.

These and other characteristics of the finding shall now be described in detail, referring to a particular embodiment thereof, given as a non-limiting example, with the help of the attached tables of drawings, where:
Figure 1 represents a partially sectioned side view of the pin connector according to the finding.
Figure 2 represents an axonometric view of the plate of the aforementioned connector.
Figures 3 and 4 represent the device according to the finding in a preliminary step to the insertion of the connector and with insertion completed.
Figure 5 represents a view from above of the preparation which is necessary to carry out on the pre-existing layer of concrete so as to be able to insert a series of connectors according to the finding.

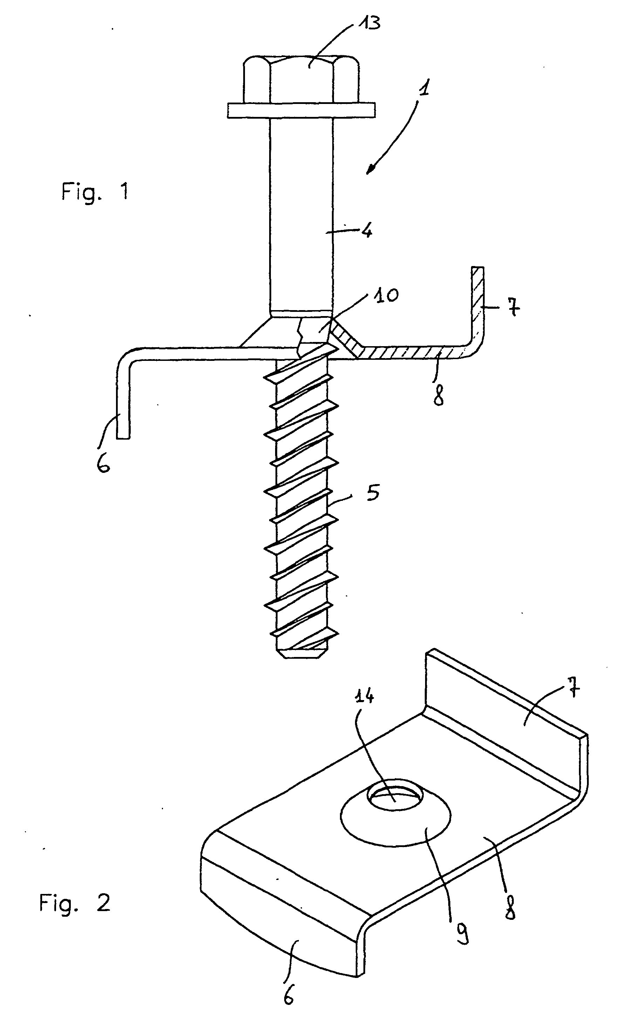

As can be seen in the figures the pin connector 1 is suitable for realising a connection between an existing layer 2 of concrete and a filler layer 3 of concrete. Such a connector comprises a shaft 4 which, at its lower shank 5, is equipped with a threaded surface. As can be clearly seen in figure 1 the shaft 4, at its intermediate portion, has a frusto-conical shaped portion 10, with the tapering going downwards in normal conditions of use of the connector. The connector is intended to be inserted inside a suitable hole 14 present in a plate 8. The hole 14 is surrounded by a collar 9, also frusto-conical shaped, which, however, has its tapered portion at the part arranged above, in the condition in which the plate is used normally.

Moreover, the plate 8 has two raised edges 6, 7, perpendicular to it, and parallel to each other, arranged at opposite sides with respect to the plane of the plate itself. The structure is fitted with an enlarged head 13, useful for screwing in the device.

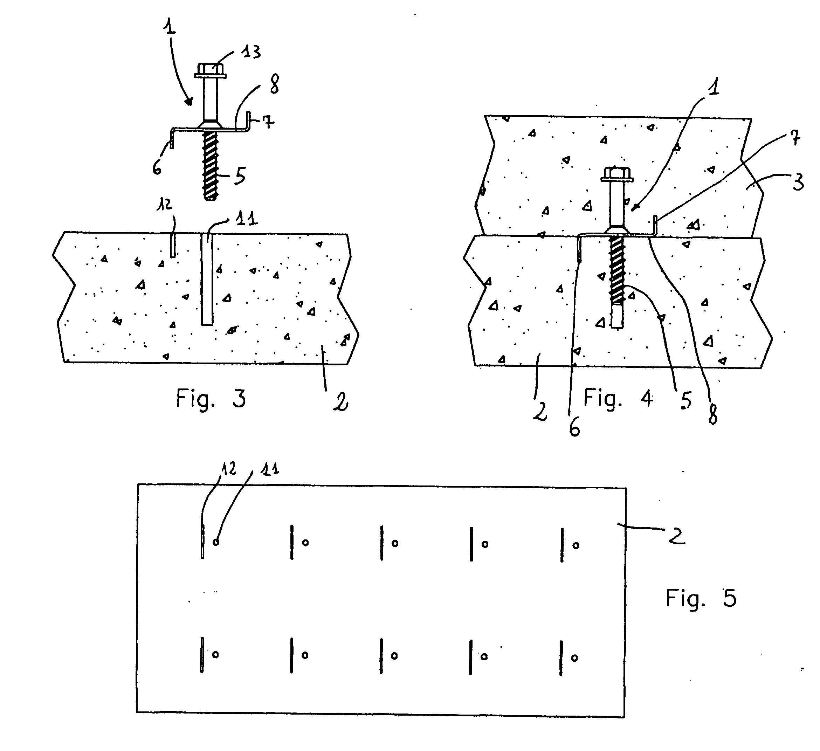

As can clearly be seen in figure 5, to be able to use the device according to the finding it is necessary to make, on the pre-existing layer 2 of concrete, some holes 11, in which to insert the shank 5 of the pin 1, as well as some grooves 12, in which to insert the raised edge 6, facing downwards, present on the plate 8. Of course, it shall be up to the operator to ensure that the distance between the hole 11 and the groove 12 is equal to that which exists between the axis of the pin 1 and that of the raised edge 6. Once the surfaced has been prepared in the way described above, first of all the shank 5 of each connector must be inserted in the corresponding hole 11, naturally taking care that the raised edge 6 is inserted in the corresponding slot 12. Then steps are taken to screw in the pin so that there is engagement between the surface of the lower shank 5 with the wall of the hole 11.

The presence of the two frusto-conical elements 9 and 10, arranged facing in opposite directions, ensures that there is a substantial gripping of the raised edge 6 in the slot 12.

Then, after having completed the positioning of all of the pin connectors on the pre-existing layer 2 of concrete, steps shall be taken to carry out the casting of the filler concrete 3, in which the portion of connector protruding from the hole 11, as well as the upper surface of the plate 8 with its protrusion 7 facing upwards, shall clearly be sunk.

From the above we can therefore see how the device according to the finding, besides being structurally very simple (which leads to its extreme cost-effectiveness), is also very simple to carry out, since the operator is limited to making holes 11, which can be made with a normal drill, and slots 12, which can be made with a normal "hose" in the pre-existing layer of concrete. Therefore, the device proves particularly useful in restructuring operations of floors and the like, where it is necessary to use a somewhat considerable number of connection elements between the two layers of concrete.

## Claims

1. Pin connector for concrete structures to be used in restructuring works of floors and the like, in particular for consolidating the connection between an existing layer of concrete (2) and a filler layer of concrete (3), said pin connector (1) comprising a shaft (4), equipped with a lower shank (5) equipped with a threading, the shaft (4) being inserted in a hole (14) present in a plate (8), which plate (8) is arranged perpendicular with respect to the longitudinal axis of the shaft, about the hole (14) being present a frusto-conical shaped collar (9), the tapered part of which is arranged upwards in normal conditions of use of the device, while at the intermediate part of the shaft of the connector there is a frusto-conical portion (10) arranged, however, with its tapered portion downwards in normal conditions of use of the device, the aforementioned two frusto-conical portions being intended to come in contact with each other when the shaft is arranged in normal operating conditions of the connector, **characterised in that** the plate (8) has a pair of raised edges (6, 7), perpendicular with respect to the plate itself, said two raised edges facing in opposite directions with respect to the plane of the plate itself.

2. Pin connector, according to claim 1, **characterised in that** it has an enlarged head (13), suitable for easing the screwing in of the shank (5) of the connector in the hole made in the pre-existing layer of concrete.

3. Method for mounting a pin connector according to claims 1 and 2, **characterised in that** it foresees the prior realisation, on the pre-existing layer (2) of concrete, of a plurality of holes (11), in which to insert the shank (5) of the connector and of a groove (12), in which to insert one of the raised edges (6) of the plate (8), said holes being in a number equal to that of the connectors to be used, whereby the connectors, after having been placed in the respective holes (11) and grooves (12), are subjected to screwing action so that the respective lower shanks (5) engage in the respective holes (11) and whereby, after all of the connectors have been put to use, the new layer (3) of concrete is cast, encasing the upper part of the connectors inside it.

## Patentansprüche

1. Stiftdübel für Betonaufbauten zur Verwendung bei der Wiederherstellung von Fußböden und dergleichen, Insbesondere zur Verfestigung der Verbindung zwischen einer bereits vorhandenen Betonschicht (2) und einer Beton-Füllschicht (3), wobei der Stiftdübel (1) einen Schaft (4) mit einem unteren, mit Gewinde versehenen Einsteckende (5) besitzt, wobei der Schaft (4) in ein in einer Platte (8) befindliches Loch (14) eingesteckt ist, und die Platte (8) senkrecht in Bezug auf die Längsachse des Schaftes angeordnet ist, wobei sich um das Loch (14) herum ein konisch geformter Kragen (9) befindet, dessen zugespitzter Teil beim Normalgebrauch der Vorrichtung nach oben gerichtet ist, während am Mittelstück des Schaftes des Dübels ein konisch geformter Abschnitt (10), jedoch mit beim Normalgebrauch der Vorrichtung nach unten gerichtetem, zugespitzten Teil, angeordnet ist, wobei die beiden genannten zugespitzten Abschnitte dafür vorgesehen sind, miteinander in Kontakt zu kommen, wenn der Schaft unter normalen Betriebsbedingungen des Dübels angeordnet ist, **dadurch gekennzeichnet, dass** die Platte (8) ein Paar senkrecht zu ihr abgewinkelte Enden (6, 7) aufweist, wobei die beiden abgewinkelten Enden in entgegengesetzte Richtungen in Bezug auf die Ebene der Platte selbst weisen.

2. Stiftdübel nach Anspruch 1, **dadurch gekennzeichnet, dass** er einen vergrößerten Kopf (13) besitzt, der zum Einschrauben des Schaftes (5) des Dübels in das in der bereits vorhandenen Betonschicht befindliche Loch dient.

3. Verfahren zur Montage eines Stiftdübels nach Anspruch 1 und 2, **dadurch gekennzeichnet, dass** es eine vorhergehende Einbringung einer Reihe von Löchern (11) in die bereits vorhandene Betonschicht (2) vorsieht, in welche der Schaft (5) des Dübels eingesetzt werden soll, und eine Rille (12), in welche eines der abgewinkelten Enden (6) der Platte (8) eingesteckt werden soll, wobei die Anzahl der Löcher so gewählt ist, dass sie mit der Anzahl der verwendeten Dübel übereinstimmt, wobei die Dübel nach dem Einstecken in die entsprechenden Löcher (11) und Rillen (12) eingeschraubt werden, so dass die entsprechenden unteren Schafte (5) in die entsprechenden Löcher (11) eingreifen, und wobei nach dem Einsetzen aller Dübel die neue Betonschicht (3) gegossen wird und den oberen Teil der Dübel einschließt.

## Revendications

1. Connecteur à broche pour structures en béton, destiné à être utilisé pour des travaux de rénovation des sols et similaire, en particulier pour consolider le raccordement entre une couche de béton (2) existante et une couche de béton (3) de remplissage, ledit connecteur à broche (1) comprenant un arbre (4) équipé avec une tige inférieure (5) dotée d'un filetage, l'arbre (4) étant inséré dans un trou (14) présent dans une plaque (8), laquelle plaque (8) est agencée perpendiculairement par rapport à l'axe longitudinal de l'arbre, autour du trou (14) étant prévu un collier (9) de forme tronconique, dont la partie progressivement rétrécie est agencée vers le haut dans des conditions normales d'utilisation du dispositif, alors qu'au niveau de la partie intermédiaire de l'arbre du connecteur, il est prévu une partie tronconique (10) agencée, cependant, avec sa partie progressivement rétrécie vers le bas dans des conditions normales d'utilisation du dispositif, les deux parties tronconiques mentionnées ci-dessus étant prévues pour venir en contact entre elles lorsque l'arbre est agencé dans des conditions de fonctionnement normales du connecteur, **caractérisé en ce que** la plaque (8) possède une paire de bords surélevés (6, 7), perpendiculaires par rapport à la plaque elle-même, lesdits deux bords surélevés se faisant face, dans des directions opposées, par rapport au plan de la plaque elle-même.

2. Connecteur à broche selon la revendication 1, **caractérisé en ce qu'**il possède une tête élargie (13), appropriée pour faciliter le vissage de la tige (5) du connecteur dans le trou réalisé dans la couche de béton préexistante.

3. Procédé de montage d'un connecteur à broche selon les revendications 1 et 2, **caractérisé en ce qu'**il prévoit la réalisation préalable, sur la couche (2) de béton préexistante, d'une pluralité de trous (11) dans lesquels insérer la tige (5) du connecteur, et d'une rainure (12) dans laquelle insérer l'un des bords surélevés (6) de la plaque (8), le nombre desdits trous étant égal à celui des connecteurs à utiliser, les connecteurs, après avoir été placés dans les trous (11) et rainures (12) respectifs, étant soumis à l'action de vissage, de sorte que les tiges inférieures (5) respectives se mettent en prise dans les trous (11) respectifs et, après que tous les connecteurs ont été placés pour l'utilisation, la nouvelle couche (3) de béton étant coulée, noyant la partie supérieure des connecteurs à l'intérieur de celle-ci.
